# EUROPÄISCHE PATENTSCHRIFT

(11) **EP 1 403 678 B1**
(45) Veröffentlichungstag und Bekanntmachung des Hinweises auf die Patenterteilung: **14.11.2007**
(21) Anmeldenummer: 03019962.4
(22) Anmeldetag: 03.09.2003
(51) Int. Cl.: G02B 23/16

(54) **Vorrichtung zum Halten einer Kamera hinter einem Fernglas**
Device for holding a camera behind a telescope
Dispositif pour maintenir un appareil photographique a l'arriere d'une jumelle

(30) Priorität: 24.09.2002 DE 10244669
(43) Veröffentlichungstag der Anmeldung: 31.03.2004
(73) Patentinhaber: Carl Zeiss Sports Optics GmbH, 35576 Wetzlar (DE)
(72) Erfinder: Claudi, Volker, 35633 Lahnau (DE); Becker, Kurt, Dr., 35440 Linden (DE); Michel, Frank, 35619 Braunfels (DE); Will, Peter, 35102 Lahra (DE)
(74) Vertreter: Schultz, Jörg Martin

(56) Entgegenhaltungen:
- US-A- 2 679 197
- US-A- 2 937 584
- US-A- 3 055 283
- US-A- 4 222 646
- US-A- 5 930 036
- US-A- 5 963 748
- US-A1- 2002 114 070

## Beschreibung

Die Erfindung betrifft eine Vorrichtung zum Halten einer Kamera hinter einem Fernglas.

Durch den von der Firma Leica angebotenen Photoadapter ist es möglich, eine Kleinbildkamera an ein Spektiv anzuschließen. Dabei erfüllt das Spektiv die Aufgabe eines Superteleobjektives für die Kamera. Dieser Adapter umfasst eine aufwendige siebenlinsige Optik. Damit der Anschluss der Kamera an den Photoadapter möglich ist, ist weiterhin ein T2 Adapter mit entsprechendem Bajonett erforderlich.

Auch von der Firma Nikon wird ein Kameraadapter angeboten, mittels dessen Hilfe eine Kamera an ein Spektiv derart angeschlossen werden kann, dass mit der Kamera Aufnahmen gemacht werden können. Mittels dieses Adapters können jedoch nur Nikon Kameras an das Nikon Spektiv angeschlossen werden, was für den Kunden eine Einschränkung bedeutet.

Nachteilig ist auch, dass bei an das Spektiv angeschlossener Kamera der Benutzer nur noch durch den Sucher der Kamera das mittels des Spektiv bereitgestellten Bildes sehen kann. Ist erst mal die Kamera an dem Spektiv montiert, so sind mehrere Handgriffe erforderlich, damit der Benutzer wieder durch das Spektiv blicken kann und somit einen vollständigen Bildeindruck erhält.

Weiterhin ist von der Firma Nikon, wie auch von der Firma Vixen ein System bekannt, bei dem eine CCD-Kamera an ein Beobachtungsfernrohr angeschlossen werden kann. An die CCD-Kamera kann ein separater LCD-Monitor angeschlossen werden, über den der Benutzer das durch das Spektiv aufgenommene Bild betrachten kann. Weiterhin kann mittels eines Videokabels eine Videokamera angeschlossen werden.

Aus der DE 28 25 505 C2 ist es bekannt, ein Fernglas mit einer Kamera mit einem Teleobjektiv fest zu verbinden, so dass das Blickfeld von Kamera und Fernglas bezüglich Winkelorientierung übereinstimmen. Eine funktionsmäßige Kopplung zwischen Fernglas und Kamera ist nicht vorgesehen. Kamera und Fernglas sind nebeneinander vorgesehen, so dass durch die Optik des Femglases und parallel durch die Optik der Kamera jeweils ein Bild erzeugt.

Aus der US 4,445,766 ist eine Kombination von Kamera und Binokular bekannt, wobei die Brennweite des Teleobjektivs der Kamera so gewählt ist, dass alles zwischen 10 Metern und unendlich scharf abgebildet wird.

Aus der US 2,933,026 ist die Kombination eines Fernglases mit einer Kamera bekannt, wobei die Fokussiereinrichtung von Kamera und Binokular derart miteinander mechanisch gekoppelt sind, dass mit Scharfstellen des Binokulars, entsprechend auch die Kamera fokussiert wird.

Aus der US 2,882,791 ist ein Binokular bekannt, dass mit einem weiteren Photoobjektiv für eine Bildaufnahme versehen ist.

Aus der US 6,330,401 B1 ist es bekannt, einen Photoapparat bei einem Binokular hinter das eine Okular des Binokulars zu halten, wobei das dann noch freie Okular vom Benutzer zur Betrachtung des vom Binokular gewonnenen Bildes genutzt werden kann. Dies ist jedoch sehr unkomfortabel für den Benutzer und es muss insbesondere aufgrund der hohen Vergrößerung des Fernglases mit unscharfen Aufnahmen des Photoapparates gerechnet werden.

Eine weitere Vorrichtung ist aus der US 2,937,584 A bekannt.

Der Erfindung lag die Aufgabe zugrunde zum einen eine Vorrichtung bereitzustellen, die kostengünstig ist.

Eine weitere Aufgabe der Erfindung war es, eine Vorrichtung bereitzustellen, mittels derer unabhängig von der verwendeten Kamera, eine Kombination von Kamera und Fernglas möglich ist.

Die Aufgaben werden durch die Merkmale des unabhängigen Anspruchs 1 gelöst.

Ein weiterer Aspekt der Erfindung war es, eine Vorrichtung bereitzustellen, mittels derer dem Benutzer die Möglichkeit gegeben wird, schnell zwischen hinter dem Okular des Fernglases angeordneter Kamera und der Möglichkeit selbst durch das Fernglas zu schauen, wechseln zu können. Die Möglichkeit des schnellen Wechselns ist insbesondere bei monokularen Ferngläsern interessant.

Die Vorrichtung gemäß Anspruch 1 umfasst eine Kameraaufnahme, ein Basiselement und eine Befestigungseinrichtung. Das Basiselement kann mittels der Befestigungseinrichtung an einer am Fernglas ausgebildeten Stativbefestigung befestigt werden und die Kamera wird durch die Kameraaufnahme gehaltert. Damit war eine Vorrichtung geschaffen, die durch ihren einfachen Aufbau kostengünstig ist und unabhängig von der verwendeten Kamera eingesetzt werden.

Vorzugsweise ist die Kamera mit ihrem Kamerakörper fest mit der Aufnahme verbunden.

In einer vorteilhaft Ausführungsform ist vorgesehen, dass in dem Basiselement eine Stativbefestigung ausgebildet ist, so dass das System bestehend aus der erfindungsgemäßen Vorrichtung, Fernglas und Kamera auf einem Stativ montiert werden kann.

Dabei hat es sich insbesondere als vorteilhaft herausgestellt, die Möglichkeit bereitzustellen, das Stativ in der Umgebung des Schwerpunktes des durch die Vorrichtung mit Kamera und Fernglas gebildeten Systems anordnen zu können. Dadurch kann gewährleistet werden, das das die Kamera umfassende System durch das Stativ eine besonders stabile und gegen Wackeln unanfällige Lagerung erfährt.

Durch die Maßnahme eine Vorrichtung mit einem Basiselement und einer Kameraaufnahme zum Halten der Kamera in einer Anordnung hinter einem Okular eines Fernglases bereitzustellen, wobei das Basiselement gegenüber dem Fernglas ortsfest gelagert ist und zwischen Kameraaufnahme und Basiselement ein Gelenk angeordnet ist, konnte eine Vorrichtung bereitgestellt werden, bei der die Kamera vom Okular des Fernglases weggeschwenkt werden kann. Dadurch kann ein schneller Wechsel zwischen vor dem Okular des Fernglases positionierter Kamera und von der Kamera freigegebenem Okular zum Durchblick durch den Benutzer vollzogen werden.

Ist insbesondere einmal die Kamera in bezug auf das Okular des Fernglases exakt positioniert, so ist ohne Aufgabe dieser Grundjustierung ein schneller Wechsel zwischen optimal vor dem Okular des Fernglases positionierter Kamera, abgesehen von der Winkelpositionseinstellung, möglich.

Es hat sich als vorteilhaft herausgestellt, als Gelenk ein Drehgelenk oder Kugelgelenk vorzusehen, wobei das Drehgelenk mindestens eine, vorzugsweise mehrere Rastpositionen aufweist.
Durch einen Wechsel zwischen den Rastpositionen wird mit dem Zurückschwenken auf die ursprünglich eingenommene Rastposition automatisch wieder die dieser Rastposition zugeordnete Winkelposition eingenommen.

In vorteilhaften Ausführungsvarianten ist es vorgesehen, eine Längenverstellung, und/oder eine Höhenverstellung und/oder eine Seiteneinstellung vorzusehen, so dass die Kamera in bezug auf das Okular exakt positioniert werden kann. Weiterhin ist es möglich, durch die Längen- und Höhenverstellung die Vorrichtung in bezug auf das jeweils verwendete Fernglas, insbesondere Spektiv, anzupassen.

In einer bevorzugten Ausführungsvariante ist vorgesehen, der Kamera eine Gelenkverbindung zuzuordnen, die arretierbar ist. Insbesondere hat sich das Vorsehen einer Kugelgelenkverbindung als besonders geeignet erwiesen. Durch diese arretierbare Kugelgelenkverbindung ist es möglich, das Objektiv der Kamera in bezug auf das Okular des Fernglases bezüglich Kipp- und Winkelposition sehr exakt einstellen zu können. Mit der Arretierung des Gelenkes wird diese einmal eingestellte Position beibehalten.

Durch das Ausrichten der Kamera zu Fernglas ist es möglich, die okularseitige Endfläche des Objektives der Kamera und die objektivseitige Endfläche des Okulars des Fernglases parallel zueinander anzuordnen. Mittels der Höhenverstellung und der Seitenverstellung ist es möglich, das Objektiv der Kamera exakt auf die Mitte des Okulars zu positionieren. Mittels der Längenverstellung kann der Abstand zwischen Endfläche Okular des Fernglases und Endfläche des Objektives der Kamera minimiert werden. Außerdem kann durch die Längenverstellung die Vorrichtung an Ferngläser mit verschiedenen Längenabmessungen angepasst werden. Weiterhin können dadurch verschiedenste Objektivabmessungen von Kameraobjektiven und verschiedenste Gehäuseabmessungen von Kameragehäusen berücksichtigt werden.

Weiter vorteilhafte Maßnahmen sind in weiteren Unteransprüchen beschrieben. Anhand der folgenden Ausführungsbeispiele wird die Erfindung näher beschrieben.

Es zeigt:
- Figur 1:: Vorrichtung zum verbinden von Kamera und Fernglas, wobei das Fernglas einen Geradeinblick aufweist;
- Figur 2:: Vorrichtung zum verbinden einer Kamera mit einem Fernglas, wobei das Fernglas einen Schrägeinblick, unter 45°C, aufweist.

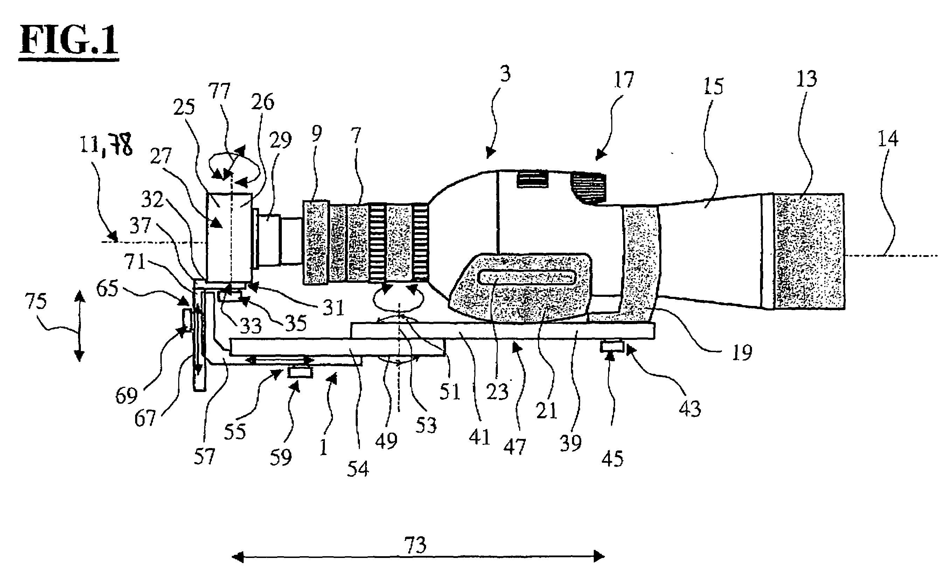

Das in Figur 1 gezeigte Fernglas 3 umfasst ein Okular 7, ein Objektiv 13 und ein Gehäuse 15. Weiterhin ist das Fernglas mit einem Fokussierantrieb 17 versehen. Im unteren Bereich des Fernglases 3 ist ein Griffbereich 21 mit Griffmulden 23 angeordnet, der vorzugsweise aus einem gummiartigen Material besteht. Weiterhin umfasst das gezeigte monokulare Fernglas, im folgenden mit Spektiv bezeichnet, eine Stativbefestigung 19. Selbstverständlich ist diese Vorrichtung in gleicher Weise für den Einsatz bei einem Binokular geeignet.

Durch die Optik des Objektivs wird eine optische Achse 14 des Objektives 13 festgelegt und durch die optischen Elemente des Okulars 7 wird eine optische Achse 11 des Okulars 7 festgelegt. Bei einem Fernglas 3 bzw. Spektiv mit Geradeinblick fallen die optischen Achse 11, 14 von Okular 7 und Objektiv 13 zusammen.

Mit der Stativbefestigung 19 ist über eine Befestigungseinrichtung 43 ein Basiselement 39 fest verbunden. Bei dem gezeigten Ausführungsbeispiel ist das Basiselement 39 in Form einer Basisplatte 41 ausgebildet. Es könnte jedoch auch von anderer Gestalt , z.B stabförmig oder auch winkelig sein.

In dem dargestellten Ausführungsbeispiel wird die Verbindung zwischen Basisplatte 41 und Stativbefestigung 19 mittels einer Klemmschraube bereitgestellt. Es könnte jedoch auch vorgesehen sein, insbesondere mittels eines Klemmbacken umfassenden Elementes eine feste Verbindung zwischen Stativbefestigung 19 und Basisplatte 41 herzustellen. Diese Befestigungsvorrichtung 43 sollte derart beschaffen sein, dass sie wieder gelöst werden kann, so dass die Vorrichtung von dem Spektiv gelöst werden kann. Derartige Stativbefestigungen 19 weisen in der Regel eine standarisierte Form auf, so dass in den meisten Fällen mittels einer 1/4 Zoll Klemmschraube 45 eine feste Verbindung zwischen Stativbefestigung 19 und Basiselement 39 hergestellt werden kann. In dem Basiselement 39 ist eine Ausnehmung, nicht eingezeichnet, ausgebildet, damit die Klemmschraube 45 die Basisplatte 41 durchdringen kann.

In der Basisplatte 41 sind mehrere neue Stativbefestigungen 47 ausgebildet. Insbesondere kann vorgesehen sein, dass in der Basisplatte 41 mehrere Bohrungen ausgebildet sind, so dass mittels einer Schraube diese Basisplatte 41 an einem Stativ angeschraubt werden kann. Die Position an der das Stativ an der Basisplatte 41 ansetzt kann dabei so gewählt werden, dass es möglich ist, die Basisplatte 41 mit dem Stativ derart zu verbinden, dass das Lot des Schwerpunktes des Systems bestehend aus Kamera, Spektiv und Vorrichtung in der Umgebung der für die Verbindung mit dem Stativ ausgewählten neuen Stativbefestigungen 47, vorzugsweise direkt die für die Verbindung mit dem Stativ ausgewählte neue Stativbefestigung 47 durchdringt.

Die Basisplatte 41 bzw. das Basiselement 39 ist mittels eines Gelenks 49 mit einem Element 54 verbunden. In dem Ausführungsbeispiel ist als Gelenk 49 ein Drehgelenk 51 vorgesehen, dessen Drehachse 53 senkrecht zur optischen Achse des Fernglases angeordnet ist. Durch diese Anordnung der Drehachse 53 kann die Kamera seitwärts von dem Okular 7 weggeschwenkt werden. Wäre die Drehachse 51 des Drehgelenkes 51 parallel zur optischen Achse des Okulars 11 angeordnet, so könnte die Kamera zwar ebenfalls von dem Okular weggeschwenkt werden, jedoch wäre der Bereich hinter der endseitigen Begrenzungsfläche des Okulars nicht gänzlich freigegeben. Dabei wird die Begrenzungsfläche durch die Endkanten des Okulars aufgespannt. Besonders vorteilhaft ist es, wenn der Bereich der durch die Senkrechte vom letzten benutzerseitigen Endpunkt des Okulars 7 des Fernglases 3 gebildet wird, mittels Herausschwenken der Kamera freigegeben wird.

Aus diesem Grunde ist es insbesondere vorteilhaft, wenn die Drehachse 53 des Drehgelenkes 51 einen Winkel zur optischen Achse 11 des Okulars 7 einschließt. Weiterhin ist es vorteilhaft, wenn die Drehachse 53 zwischen neuer Stativbefestigung 47 und Begrenzungsfläche des Okular 7 des Fernglases 3 angeordnet ist. Dadurch wird gewährleistet, dass bei schwenkender Kamera der Bereich hinter dem Okular vollständig bzw. nahezu vollständig freigegeben wird.

In dem dargestellten Ausführungsbeispiel wird ein Drehgelenk 53 verwendet, bei dem zu beiden Seiten, d.h. bei Schwenken nach rechts und bei Schwenken nach links der Kamera ausgehend von der hinter dem Okular eingenommenen Position jeweils drei Raststellungen im Abstand von 45° ausgebildet sind. Durch ein Schwenken nach links, wird der Freiraum auf der rechten Seite des Spektivs vollständig freihalten, so dass ein Rechtshänder ungehindert den Fokussierantrieb ohne Einschränkung durch die erfindungsgemäße Vorrichtung betätigen kann.

Anstelle des Drehgelenkes kann auch ein Kugelgelenk vorgesehen sein, durch mittels dessen die Kamera vom Okular des Fernglases weggeschwenkt werden kann. Es hat sich insbesondere als vorteilhaft herausgestellt, wenn dieser Drehpunkt in etwa auf der optischen Achse 11 des Okulars 7 liegt.

Das drehbewegliche Element 54 ist mit einem Gegenelement 57 zur Bereitstellung einer Längeneinstellung 55 über ein Klemmelement 59 lösbar verbunden. Durch Lösen des Klemmelementes 59 kann das Gegenelement 57 gegenüber dem drehbeweglichen Element 54 verschoben werden. Eine derartige Längenverstellung lässt sich zum Beispiel durch Ausbildung eines Langloches in dem Gegenelement der Längsverstellung 57 bereitstellten. Es kann eine Axialführung vorgesehen sein, so dass das Gegenelement 57 nur in Längsrichtung gegenüber dem Element 54 verschoben werden kann. Beispielsweise kann als drehbewegliche Element 54 ein U-förmiges Element vorgesehen sein, wobei durch die beiden Schenkel des U's das Gegenelement 57 geführt wird. Bei einer derartigen Ausführung kann das Gegenelement 57 durch ein Klemmelement 59, das sich gegen die Schenkel des U-Profils abstützt, gegen den Boden des U-Elementes gepresst werden, wodurch eine feste Klemmung erreicht werden kann. Aufgrund der zahlreichen dem Fachmann bekannten Klemmkonstruktionen wird auf eine weitere Aufzählung verzichtet.

Ist keine Axialführung vorgesehen, so kann auch auf ein Gelenk verzichtet werden und durch Lösen des Klemmelementes 59 der Längenverstellung das Gegenelement 57 der Längenverstellung zur Seite geschwenkt werden. Bei einer derartigen Ausführung kann auf ein separates drehbewegliches Element 54 verzichtet werden.

Die Anordnung von Drehelement 51 und Längenverstellung 57 können selbstverständlich auch in vertauschter Reichenfolge angeordnet sein.

Das Gegenelement 57 ist als Winkelement ausgebildet. Gegen den zweiten Schenkel, der nicht mit dem drehbeweglichen Element 54 in Verbindung steht, ist ein Schiebeelement 67 lösbar und fixierbar mittels eines Klemmelementes 69 verbunden. Bei dieser Art der Klemmverbindung mittels des Klemmelementes 69 kann das gleiche System wie bei der Klemmverbindung mittels des Klemmelementes 59 verwendet werden. Durch dieses Schiebeelement 67 kann eine Höheverstellung der Kamera, insbesondere des Objektivs 29 der Kamera in bezug auf das Okular 7 des Fernglases 3 vorgenommen werden.

Das Schiebeelement 67 weist eine Kameraaufnahme 31 in Form einer Grundplatte 32 auf. Diese Grundplatte 32 ist Teil des als Winkelelementes 37 ausgebildete Schiebeelement 67. Bei dem dargestellten Ausführungsbeispiel wird das bei den meisten Kameras im Boden des Kameragehäuses ausgebildetes Gewinde genutzt, um das Kameragehäuse 26 und damit die Kamera 25 fest mit der Grundplatte 32 mittels einer Schraube 35 zu befestigen. Weist die Kamera 25 nicht ein derartiges Gewinde nicht auf, so kann beispielsweise eine Befestigung mittels Klemmbacken an dem als Winkelelement ausgebildeten Schiebeelement 67 vorgesehen sein.

In einer vorteilhaften Ausführungsform, nicht dargestellt, kann entweder mittels Klemmung oder Schraubung ein Kugelkopf eines Kugelgelenkes an der Kamera befestigt werden, der dann in einer Kugelpfanne gelagert wird. Die Kugelpfanne ist mit dem Schiebegelenk fest verbunden, wobei diese Kugelpfanne mit einem Arretiermechanismus versehen ist, vorzugsweise in Form von Klemmbacken. Mittels des Arretiermechanismuses kann eine Einstellung der Winkelposition der Kamera und damit des Gelenkes arretiert werden. Damit ist es auch möglich, die in Figur 1 dargestellte Ausführung der Vorrichtung auch bei Ferngläsern mit Schrägeinblick zu verwenden, wobei lediglich das Winkelelement 37 mit einem länger bzw. entsprechend lang ausgebildeten Schiebebereich verwendet wird.

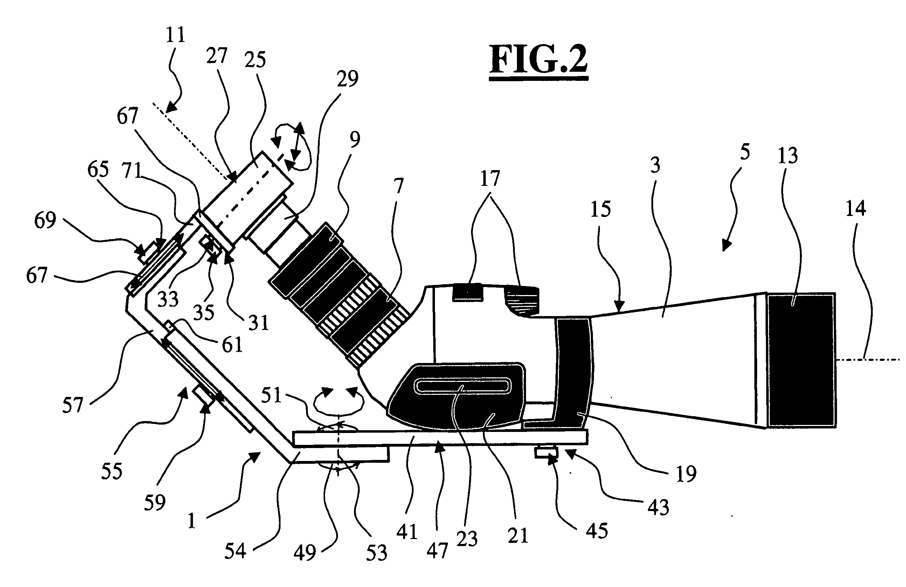

Das in Figur 2 dargestellte System bestehend aus Kamera und Spektiv unterscheidet sich von dem in Figur 1 dargestellten System lediglich dadurch, dass dieses Spektiv 3 einen Schrägeinblick, hier unter 45°, aufweist. Zur Anpassung der Vorrichtung 1 an diesen gewinkelten Einblick, ist das drehbewegliche Element 54 gewinkelt ausgebildet.

Im folgenden wird nur auf die Unterschiede des in Figur 2 dargestellten Ausführungsbeispiel in bezug auf Figur 1 eingegangen. Weiterhin ist bei diesem Ausführungsbeispiel ein zusätzliches Anschlagelement 61 vorgesehen, so dass durch Lösen des Klemmelementes 59 vor einem Schwenken die Kamera 25 die Kamera in Richtung der optischen Achse 11 des Okulars 7 vom Okular 7 des Fernglases 3 wegbewegt werden kann, bevor eine Schwenkbewegung ausgeführt wird. Zum Einstellen der ursprünglichen Position wird das Gegenelement 57 der Längeneinstellung 55 wieder bis zum Anschlag 61 verschoben und mittels des Klemmelementes 59 fixiert. Es kann auch vorgesehen sein ein Herausziehen der Kamera 25 weg vom Okular des Fernglases 3 um einen vorbestimmten maximalen Weg entgegen einer Federkraft zu ermöglich, wobei bei nachlassender von außen wirkenden Kraft wieder die Grundposition eingenommen wird. Dieser Mechanismus dient dazu das Wegschwenken von dem Okular zu erleichtern und zu ermöglichen, den Abstand zwischen letzter Linsenoberfläche des Okulars 7 und Objektiv der Kamera 29 zu minimieren.

Um den Lichteinfall zwischen Objektiv und Kamera zu minimieren, kann der Benutzer im Fall das das Okular 7 eine Augenmuschel 9 aufweist, diese Augenmuschel 9 herausziehen. Der Benutzer kann auch einfach die Hand um die Verbindungsstelle Kameraobjektiv 29 und Okular 7 Fernglases legen.

Ist die Kamera 25 in Bezug auf das Spektiv positioniert, so fokussiert die Kamera automatisch auf das durch das Spektiv erzeugte Bild sofern eine Fokussierung durch das Objektiv durchgeführt wird. Nur in seltenen Fällen muss manuell nachfokussiert werden. Wird keine Autofokuskamera eingesetzt, so ist manuell zu fokussieren. Diese Vorrichtung ist für Filmkameras, Digitalkameras, Videokameras in gleicher Weise geeignet.

Durch die Wahl der Vergrößerung, auf die die Kamera eingestellt ist, kann der durch die Kamera abbildbare Bildausschnitt verändert werden. Dadurch kann der Bildausschnitt der von der Kamera aufgenommen werden kann, an den vom Spektiv abgebildeten Bildausschnitt angepasst werden.

Bei Digitalkameras bzw. Videokameras kann diese Anpassung auch durch Nachbearbeitung der aufgenommenen Bilder vorgenommen, wobei die den Bildeindruck störenden Ränder entfernt werden.

### Bezugszeichenliste

- 1: Vorrichtung/Haltvorrichtung
- 3: Fernglas
- 5: Spektiv
- 7: Okular
- 9: Augenmuschel
- 11: optische Achse des Okulars
- 13: Objektivfernglas
- 14: optische Achse des Objektivs
- 15: Gehäuse
- 17: Fokussierantrieb
- 19: Stativbefestigung
- 21: Griffbereich
- 23: Griffmulden
- 25: Kamera
- 26: Kameragehäuse
- 27: Digitalkamera
- 29: Kameraobjektiv
- 31: Kameraaufnahme
- 32: Grundplatte
- 33: Gewindebohrung
- 35: Klemmschraube
- 37: Winkelelement
- 39: Basiselement
- 41: Basisplatte
- 43: Befestigungsvorrichtung
- 45: Klemmschraube
- 47: neue Stativbefestigung
- 49: Gelenk
- 51: Drehgelenk
- 53: Drehachse
- 54: drehbewegliches Element
- 55: Längeneinstellung
- 57: Gegenelement der Längeneinstellung
- 59: Klemmelement
- 61: Anschlagelement
- 63: Winkelelement
- 65: Höhenverstellung
- 67: Schiebeelement der Höhenverstellung
- 69: Klemmelement
- 71: Winkel
- 73: horizontaler Abstand
- 75: vertikaler Abstand
- 77: Seiteneinstellung

## Patentansprüche

1. Vorrichtung mit einer Kameraaufnahme zum Halten einer Kamera (25) in einer Anordnung hinter einem Okular eines Fernglases (3) zur Aufnahme eines von dem Fernglas (3) bereitgestellten Bildes mittels der Kamera (25), wobei die Vorrichtung (1) ein Basiselement (39) mit einer Befestigungsvorrichtung (43) aufweist, durch die das Basiselement (39) ortsfest gegenüber dem Fernglas (3) angeordnet werden kann und dass die Kameraaufnahme (31) über ein Drehgelenk (51) mit dem Basiselement (39) verbunden ist, **dadurch gekennzeichnet, dass** das Drehgelenk (51) mindestens eine, vorzugsweise mehrere Rastpositionen aufweist und **dass** das Basiselement (39) mit einer Befestigungsvorrichtung (43) zur Befestigung an einer Stativbefestigung (19) des Fernglases (3) ausgebildet ist.

2. Vorrichtung nach Anspruch 1, **dadurch gekennzeichnet, dass** in dem Basiselement (39) eine neue Stativbefestigung ausgebildet ist.

3. Vorrichtung nach Anspruch 2, **dadurch gekennzeichnet, dass** die neue Stativbefestigung (47) in Bezug auf die am Fernglas (3) ausgebildete Stativbefestigung (19) in Richtung Okular (7) verschoben anordnet ist.

4. Vorrichtung nach Anspruch 2 oder 3, **dadurch gekennzeichnet, dass** mehrere neue Stativbefestigungen (47) vorgesehen sind oder eine Stativbefestigung mit variabler Position vorgesehen ist, so dass immer eine der neuen Stativbefestigungen (47) im Bereich des Schwerpunkts des aus Kamera und Fernglas bestehenden Systems angeordnet ist.

5. Vorrichtung nach Anspruch 1, **dadurch gekennzeichnet, dass** das Drehgelenk (51) zwischen dem Lot von der Endfläche Okular (7) und der neuen Stativbefestigung (47) angeordnet ist.

6. Vorrichtung nach mindestens einem der vorangegangenen Ansprüche, **dadurch gekennzeichnet, dass** eine Längeneinstellung (55) vorgesehen ist, durch die der horizontale Abstand (73) von Kameraaufnahme (31) zur Befestigungseinrichtung (43) verändert werden kann.

7. Vorrichtung nach mindestens einem der vorangegangenen Ansprüche, **dadurch gekennzeichnet, dass** eine Höhenverstellung (65) vorgesehen ist, mittels derer ein Vertikalabstand (75) zwischen Basiselement (39) und Kameraaufnahme (31) variiert werden kann.

8. Vorrichtung nach mindestens einem der vorangegangenen Ansprüche, **dadurch gekennzeichnet, dass** eine Seiteneinstellung (77) zur Positionierung des Kameraobjektives (29) gegenüber dem Okular (7) des Fernglases vorgesehen ist.

9. Vorrichtung nach einem der vorangegangenen Ansprüche, **dadurch gekennzeichnet, dass** die Kameraaufnahme (31) eine arretierbare Gelenkverbindung, insbesondere Kugelgelenkverbindung umfasst, mittels derer eine parallele Ausrichtung von Kameraobjektiv (29) und Fernglasokular (7) möglich ist.

10. Monokulares Fernglas mit einer Vorrichtung nach mindestens einem der vorangegangenen Ansprüche.

11. Vorrichtung zum Halten einer Kamera hinter einem Okular eines Fernglases, nach mindestens einem der vorangegangenen Ansprüche, **dadurch gekennzeichnet, dass** die optische Achse der Kamera (78) um einen Punkt schwenkbar ist, der in etwa auf der optischen Achse des Okulars (11) liegt.

12. Vorrichtung nach mindestens einem der vorangegangenen Ansprüche, **dadurch gekennzeichnet, dass** das Basiselement (39) ein Kugelgelenk umfasst, wobei die Kamera mittels des Kugelgelenkes von dem Okular weggeschwenkt werden kann.

## Claims

1. Device having a camera holder for holding a camera (25) in an arrangement behind an eyepiece of a telescope (3) for taking an image, provided by the telescope (3), by means of the camera (25), the device (1) having a base element (39) wit h a fastening device (43) by means of which the base element (39) can be arranged in a stationary fashion relative to the telescope (3), and the camera holder (31) being connected to the base element (39) via a rotary joint (51), **characterized in that** the rotary joint (51) has at least one, preferably a number of latched positions, and **in that** the base element (39) with a fastening device (43) is constructed for fastening on a stand fastening (19) of the telescope (3).

2. Device according to Claim 1, **characterized in that** a novel stand fastening is constructed in the base element (39).

3. Device according to Claim 2, **characterized in that** the novel stand fastening (47) is arranged offset in the direction of the eyepiece (7) with reference to the stand fastening (19) constructed on the telescope (3).

4. Device according to Claim 2 or 3, **characterized in that** a number of novel stand fastenings (47) are provided, or a stand fastening of variable position is provided, such that always one of the novel stand fastenings (47) is arranged in the region of the centroid of the system consisting of camera and telescope.

5. Device according to Claim 1, **characterized in that** the rotary joint (51) is arranged between the normal from the end face of the eyepiece (7) and the novel stand fastening (47).

6. Device according to at least one of the preceding claims, **characterized in that** a length setting (55) is provided by means of which the horizontal distance (73) from camera holder (31) to the fastening device (43) can be varied.

7. Device according to at least one of the preceding claims, **characterized in that** a height adjustment (65) is provided by means of which a vertical distance (75) between the base element (39) and camera holder (31) can be varied.

8. Device according to at least one of the preceding claims, **characterized in that** a lateral setting (77) is provided for positioning the camera objective (29) with reference to the eyepiece (7) of the telescope.

9. Device according to one of the preceding claims, **characterized in that** the camera holder (31) comprises a lockable joint connection, in particular a ball joint by means of which a parallel alignment of camera objective (29) and telescope eyepiece (7) is possible.

10. Monocular telescope having a device according to at least one of the preceding claims.

11. Device for holding a camera behind an eyepiece of a telescope according to at least one of the preceding claims, **characterized in that** the optical axis of the camera (78) can be pivoted about a point which lies approximately on the optical axis of the eyepiece (11).

12. Device according to at least one of the preceding claims, **characterized in that** the base element (39) comprises a ball joint, it being possible for the camera to be pivoted away from the eyepiece by means of the ball joint.

## Revendications

1. Dispositif avec un support pour un appareil photographique pour maintenir un appareil photographique (25) dans une disposition à l'arrière d'un oculaire d'une longue -vue (3) pour la prise d'une image fournie par la longue -vue (3) au moye n de l'appareil photographique (25), le dispositif (1) comprenant un élément de base (39) avec un dispositif de fixation (43) au moyen duquel l'élément de base (39) peut être disposé de manière fixe par rapport à la longue-vue (3) et le support de l'appare il photographique (31) étant relié avec l'élément de base (39) au moyen d'une articulation tournante (51), **caractérisé en ce que** l'articulation tournante (51) est pourvue d'au moins une et de préférence de plusieurs positions d'arrêt, et **en ce que** l'élémen t de base (39) est réalisé avec un dispositif de fixation (43) pour sa fixation sur un e fixation pour un pied (19) de la longue-vue (3).

2. Dispositif selon la revendication 1, **caractérisé en ce qu'**une nouvelle fixation pour un pied est réalisée dans l'élément de base (39).

3. Dispositif selon la revendication 2, **caractérisé en ce que** la nouvelle fixation pour un pied (47) est disposée décalée en direction de l'oculaire (7) par rapport à la fixation pour un pied (19) réalisée sur la longue-vue (3).

4. Dispositif selon la revendication 2 ou 3, **caractérisé en ce que** plusieurs nouvelles fixations pour un pied (47) sont prévues ou **en ce qu'**une fixation à position variable pour un pied est prévue, de sorte que l'une des nouvelles fixations pour un pied (47) soit toujours placée dans la zone du centre de gravité du système composé de l'appareil photographique et de la longue-vue.

5. Dispositif selon la revendication 1, **caractérisé en ce que** l'articulation tournante (51) est disposée entre la verticale de la sur face d'extrémité de l'oculaire (7) et la nouvelle fixation pour un pied (47).

6. Dispositif selon au moins l'une des revendications précédentes, **caractérisé en ce qu'**un réglage en longueur (55), qui permet de modifier la distance horizontale (73) entre le support de l'appareil photographique (31) et le dispositif de fixation (43), est prévu.

7. Dispositif selon au moins l'une des revendications précédentes, **caractérisé en ce qu'**un réglage en hauteur (65), qui permet de faire varier une distance verticale (75) entre l'élément de base (39) et le support de l'appareil photographique (31), est prévu.

8. Dispositif selon au moins l'une des revendications précédentes, **caractérisé en ce qu'**un réglage latéral (77), pour le positionnement de l'objectif (29) de l'appareil photographique par rapport à l'oculaire (7) de la longue-vue, est prévu.

9. Dispositif selon l'une des revendications précédentes, **caractérisé en ce que** le support de l'appareil photographique (31) comprend une liaison articulée, en particulier un e liaison à rotule, pouvant être bloquée, au moyen de laquelle un alignement parallèle de l'objectif (29) de l'appareil photographique et de l'oculaire (7) de la longue-vue est possible.

10. Longue-vue monoculaire avec un dispositif selon au moins l'une des revendications précédentes.

11. Dispositif pour maintenir un appareil photographique à l'arrière d'un oculaire d'une longue-vue, selon au moins l'une des revendications précédentes, **caractérisé en ce que** l'axe optique (78) de l'appareil photographique peut être pivoté autour d'un point qui se situe sensiblement sur l'axe optique de l'oculaire (11).

12. Dispositif selon au moins l'une des revendications précédentes, **caractérisé en ce que** l'élément de base (39) comprend une articulation à rotule, l'appareil photographique pouvant être pivoté au moyen de l'articulation à rotule pour l'éloigner de l'oculaire.
